# EUROPÄISCHE PATENTSCHRIFT

(11) **EP 2 636 929 B1**
(45) Veröffentlichungstag und Bekanntmachung des Hinweises auf die Patenterteilung: **29.11.2017**
(21) Anmeldenummer: 13157427.9
(22) Anmeldetag: 01.03.2013
(51) Int. Cl.: F16H 63/34, F15B 15/26

(54) **Verriegelungseinheit**
Locking unit
Unité de verrouillage

(30) Priorität: 05.03.2012 DE 102012004157
(43) Veröffentlichungstag der Anmeldung: 11.09.2013
(73) Patentinhaber: SVM Schultz Verwaltungs-GmbH & Co. KG, 87700 Memmingen (DE)
(72) Erfinder: Scherer, Georg, 87757 Kirchheim (DE); Mang, Helmut, 87700 Memmingen (DE)
(74) Vertreter: Pfister, Stefan Helmut Ulrich

(56) Entgegenhaltungen:
- DE-A1-102005 001 548
- DE-A1-102005 060 583

## Beschreibung

Die Erfindung betrifft eine Verriegelungseinheit für das Verriegeln der Bewegung eines, von einem Antrieb bewegbaren Kolbens, wobei die Verriegelungseinheit einen Elektromagneten und eine Rastbaugruppe mit einem Federbereich und einem Klinkenbereich umfasst, wobei der elastische Federbereich die Rastbaugruppe gegen den Anker beziehungsweise die Ankerstange des Elektromagneten oder gegen einen vom Anker beziehungsweise der Ankerstange gehaltenen Bolzen derart anstellt, dass in einer Verriegelungsstellung der Klinkenbereich die Bewegung des Kolbens blockiert, wobei in einer Entriegelungsstellung die Bewegung des Kolbens freigegeben ist. Vorgenannte Verriegelungseinheiten finden insbesondere bei der Parksperre von Automatikgetrieben Verwendung. Als Antrieb eines bewegbaren Kolbens wird hierbei das Druckpotential des hydraulischen Kreislaufes des Automatikgetriebes eingesetzt.

Neben dem Ausgestalten des Antriebes des bewegbaren Kolbens als Teil eines Arbeitszylinders, also als druckbeaufschlagbarer Kolben, ist es auch möglich, dass als Antrieb zum Beispiel ein Elektromotor und ein anderer, zum Beispiel elektromagnetisch oder elektrisch wirkender Antrieb, vorgesehen ist. Die Erfindung ist auf die spezielle Ausgestaltung des Antriebes nicht beschränkt.

Ein Fahrzeug mit Handschaltgetriebe kann durch Einlegen eines Ganges gegen unbeabsichtigtes Wegrollen im Stillstand bei abgestelltem Motor gesichert werden. Bei Automatikgetrieben ist dies jedoch nicht möglich, da bei abgestelltem Motor kein Kraftschluss zu den Antriebsrädern besteht. Automatikgetriebe haben daher eine mechanische Verriegelung der Getriebeabtriebswelle, die in der Parkstellung zu aktivieren ist, das heißt, einzustellen ist und so ein Wegrollen des Fahrzeuges verhindert.

Die Verriegelungseinheit wirkt dabei zusammen mit dem hydraulischen Kreislauf des Automatikgetriebes. Bei eingelegter Parksperre ist es dabei in der Regel vorgesehen, dass der Kolben entriegelt ist. Üblicher Weise wirkt dabei die Kolbenstange des Kolbens mit einem Blockierelement in geeignter Weise auf den Antriebsstrang. In der Fahrtstellung, also bei ausgeschalteter Parksperre, ist der bewegte, insbesondere druckbeaufschlagte Kolben verriegelt.

Eine Verriegelungseinheit ergibt sich zum Beispiel aus der europäischen Patentschrift 1 408 260.

Die Rastbaugruppe, die im Stand der Technik als einteilig beziehungsweise einstückig ausgebildetes Bauteil bekannt ist, erfüllt dabei mindestens zwei Aufgaben. Der Klinkenbereich der Rastbaugruppe wirkt derart mit dem Kolben zusammen, um die Bewegung des Kolbens in der Verriegelungsstellung zu blockieren. Der Klinkenbereich der Rastbaugruppe ist dabei dadurch gekennzeichnet, dass es sich um den örtlichen Bereich an der Rastbaugruppe handelt, der dem Kolben zugeordnet ist beziehungsweise der mit dem Kolben zusammenwirkt. Der Klinkenbereich umfasst dabei nicht nur einen Haken, Klinke, Vorsprung oder Absatz, der in geeigneter Weise mit dem Kolben zusammenwirkt, sondern auch weitere Bereiche. Üblicher Weise ist gerade der Klinkenbereich in Bewegungsrichtung des Kolbens mechanisch auf Zug oder Schlag entsprechend beansprucht.

Sich am Klinkenbereich anschließend beziehungsweise teilweise auch den Klinkenbereich überlappend ist an der Rastbaugruppe auch ein Federbereich vorgesehen. Der Federbereich hat eine entsprechende elastische Ausgestaltung, um zu erreichen, dass die Rastbaugruppe radial beziehungsweise winklig, bezogen auf die Bewegungsrichtung des Kolbens, gegen den Anker beziehungsweise die Ankerstange des Elektromagneten oder gegen einen vom Anker beziehungsweise der Ankerstange gehaltenen Bolzen angestellt wird beziehungsweise eine entsprechende Vorspannung aufweist. Dabei ist an der Rastbaugruppe ein Nocken oder ein sonstiges Führungselement vorgesehen, das in geeigneter Weise mit dem Anker, der Ankerstange beziehungsweise dem Bolzen zusammenwirkt und durch die Bewegung des Ankers (bei Beaufschlagung des Elektromagneten mit Strom) in winkliger beziehungsweise rechtwinkliger oder radialer Richtung bezüglich der Bewegungsrichtung des Kolbens auslenkbar zu sein.

Die Anordnung ist dabei so gewählt, dass in einer Verriegelungsstellung der Klinkenbereich die Bewegung des Kolbens blockiert. Durch die elastische Ausgestaltung des Federbereiches wird die Rastbaugruppe zumindest teilweise derart bewegt beziehungsweise verschwenkt, dass der Klinkenbereich mit dem Kolben beziehungsweise dem Kolbenkopf, der eine entsprechende Hinterschneidung, Raste oder ähnliches aufweist, zusammenwirken kann und so die Bewegung des Kolbens blockiert ist. Dabei korrespondiert die Verriegelungsstellung mit dem angezogenen Elektromagneten, das heißt, dem strombeaufschlagten Elektromagneten, wodurch der Bolzen, der auf der Ankerstange beziehungsweise dem Anker angeordnet ist, nicht mit dem an der Rastbaugruppe vorgesehenen Nocken zusammenwirkt, der im abgefallenen (Elektromagnet ist nicht Strom beaufschlagt) Entriegelungsstellung die Rastbaugruppe derart nach außen stellt, dass der Klinkenbereich nicht mehr mit dem Kolbenkopf zusammenwirken kann.

Es ist daher klar, dass die Rastbaugruppe einer entsprechenden mechanische Belastung, die unterschiedliche Gründe hat, unterliegt. Zwei gattungsgemäße Verriegelungsvorrichtungen ergeben sich aus den Offenlegungsschriften DE 10 2005 060583 A1 und DE 10 2005 001548 A1.

Es ist Aufgabe der vorliegenden Erfindung, eine gattungsgemäße Verriegelungseinheit so weiterzuentwickeln, dass diese eine höhere Lebensdauer hat.

Zur Lösung dieser Aufgabe wird eine Verriegelungseinheit nach dem Gegenstand des Anspruchs 1 vorgeschlagene.

Erfindungsgemäß weist der Klinkenbereich eine zumindest in Bewegungsrichtung des Kolbens wirkende Verstärkung auf. Durch die Ertüchtigung zumindest des Klinkenbereiches durch eine, zumindest in Bewegungsrichtung des Kolbens wirkende Verstärkung, wird erreicht, dass eine Bruchgefahr der Rastbaugruppe gerade in dem mechanisch stark belasteten Klinkenbereich erheblich reduziert wird.

Hieraus resultiert eine entsprechende, teilweise erhebliche, Steigerung der Lebensdauer der erfindungsgemäßen Verriegelungseinheit.

In einer bevorzugten Ausgestaltung der Erfindung ist vorgesehen, dass die Verstärkung durch eine durch Wärmebehandlung hervorgerufene Erhöhung der spezifischen Festigkeit des Materials des Klinkenbereiches gebildet ist. Allgemein ist es bekannt, durch eine Wärmebehandlung ein Metall derart zu vergüten, dass es hernach eine höhere spezifische Festigkeit aufweist, wie zuvor.

Die Wärmebehandlung wird dabei bevorzugt nur auf den Klinkenbereich beschränkt, um in diesem Bereich, wo die höhere Festigkeit von Bedeutung ist, diese zur Verfügung zu stellen. Es ist aber für die Erfindung überraschender Weise unschädlich, wenn die gesamte Rastbaugruppe, also auch der Federbereich, die gleiche oder eine ähnliche Wärmebehandlung erfährt, wodurch sich der entsprechende Verfahrensschritt erheblich erleichtert durchführen lässt. Es ist nämlich gefunden worden, dass die mit der Wärmebehandlung einhergehende Erhöhung der Festigkeit, die auch zu einem spröderen Material führt, im Federbereich unschädlich ist. Üblicher Weise würde man erwarten, dass die Wärmebehandlung für den Federbereich gerade schädlich ist und dort dann eine Verschlechterung der Eigenschaften resultiert (zum Beispiel schnellerer Bruch der Rastbaugruppe in Federbereich aufgrund des spröderen Materials) was im vorliegenden Fall aber gerade nicht der Fall ist.

In einer bevorzugten Ausgestaltung der Erfindung ist gefunden worden, dass sich durch die Wärmebehandlung, die bevorzugt einem Verformungsschritt bei der Herstellung der Rastbaugruppe nachfolgt, sich eine relative Festigkeitserhöhung von mindestens 4%, bevorzugt von mindestens 5%, ergibt. So ist zum Beispiel in einem Ausführungsbeispiel erreicht worden, dass im ungehärteten Zustand das Material des Klinkenbereiches (beziehungsweise der gesamten Rastbaugruppe) eine Härte von 324 HV (Härte nach Vickers) betrug, die nach der Wärmebehandlung auf circa 345 HV anstieg. Diese verhältnismäßig geringe Steigerung der Härte führt zu einer Verbesserung der Zugfestigkeit gerade im Klinkenbereich. Hieraus resultiert eine erhebliche, circa mindestens 4-fach höhere Lebenszeit der erfindungsgemäßen Verriegelungseinheit führt!

Der erfindungsgemäße Vorschlag, durch eine Wärmebehandlung zumindest des Klinkenbereiches die Festigkeit des Materials des Klinkenbereiches zu steigern, führt nicht zu den eigentlich zu erwartenden Nachteilen im Hinblick auf die federnde, beziehungsweise elastische Eigenschaft der Rastbaugruppe beziehungsweise des Federbereiches, sondern steigert in erheblichem Maße die Lebensdauer der gesamten erfindungsgemäßen Verriegelungseinheit!

In einer bevorzugten Ausgestaltung der Erfindung ist vorgesehen, dass die gesamte Rastbaugruppe, zumindest aber der Klinkenbereich, aus einem zumindest kalt, dauerhaft verformbaren Federstahl gebildet ist. Die Verriegelungseinheit nach der Erfindung wird in sehr hoher Stückzahl hergestellt. Eine Verriegelungseinheit weist üblicher Weise mehr als nur eine Rastbaugruppe auf, oftmals sind zum Beispiel drei Rastbaugruppen in einer Verriegelungseinheit verbaut. Aufgrund der massenhaften Produktion ist natürlich auch eine kostengünstige Herstellung von Bedeutung, die durch einen möglichst effizienten Einsatz von formgebenden und/oder biegenden und/oder stanzenden Werkzeugen erreicht wird, die bevorzugt in einem Bearbeitungsbeziehungsweise Verformungsschritt alle notwendigen Arbeiten an der Rastbaugruppe, insbesondere im Klinkenbereich und so weiter, ausführt. Dabei ist natürlich auch das Material der Rastbaugruppe, zumindest aber des Klinkenbereichs, so auszuwählen, dass einerseits eine dauerhafte Verformbarkeit des Materials gegeben ist, auf der anderen Seite aber die federnde Eigenschaft der Rastbaugruppe, die insbesondere durch den Federbereich zur Verfügung gestellt wird, ebenfalls ausgebildet ist. Es kommt also bei der Realisierung der Erfindung insbesondere auf die geschickte Auswahl des Materials der Rastbaugruppe beziehungsweise zumindest des Materials des Klinkenbereiches an, der vorzugsweise aus einem kalt-verformbaren, dabei aber dauerhaft formstabilen Federstahl gebildet ist, wobei die Erfindung hierbei zum Beispiel (aber nicht ausschließlich) Chrom-Nickel-Stähle vorschlägt.

Dabei wird das Material (zum Beispiel ein Stahl) zum Beispiel als Bandmaterial zur Verfügung gestellt und in einem kontinuierlichen Prozess aus dem Material formgebend herausgestanzt.

Die Herstellung zumindest des Klinkenteiles der Rastbaugruppe erfolgt dabei in mehreren Schritten. Dem Verformungsschritt, der sowohl stanzende, also Material entfernende Schritte wie formgebende, zum Beispiel biegende oder tiefziehende Bearbeitungsschritte kombiniert, folgt ein Wärmebehandlungsschritt nach, bei welchem dann das in Form und Kontur gebrachte Element durch die Wärmebehandlung eine Festigkeitserhöhung erfährt.

Alternativ zur Ausbildung der Verstärkung des Klinkenbereiches durch eine Erhöhung der spezifischen Festigkeit wird des Weiteren vorgeschlagen, dass die Verstärkung durch eine Erhöhung der Materialdicke des den Klinkenbereich bildenden Materials erreicht wird. Es sind zum Beispiel sogenannte Stufenbleche bekannt, die eine unterschiedliche Materialdicke aufweisen und in dem mechanisch höher beanspruchten Klinkenbereich eine größere Materialdicke und daher eine größere Stabilität zur Verfügung steht. So kann sich zum Beispiel die üblicher Weise bestehende Materialdicke der Rastbaugruppe im Klinkenbereich von 0,5 mm auf 0,8 mm oder 1 mm erhöhen.

In einer weiteren alternativen Ausgestaltung der Erfindung ist vorgesehen, dass das Klinkenelement eine in der Verriegelungsstellung mit dem Kolben zusammenwirkende Haltefläche aufweist und sich die Verstärkung am Klinkenbereich an der der Haltefläche abgewandten Seite des Klinkenelementes befindet. Dabei ist der Klinkenbereich zumindest gebildet von einem Klinkenelement und einem Klinkenträger, wobei das Klinkenelement rechtwinklig oder winklig, insbesondere in Richtung zu dem Kolben hin am Klinkenträger absteht. Das Klinkenelement hat dabei die Aufgabe, tatsächlich haltend mit dem Kolben zusammenzuwirken, wobei hierfür an dem Klinkenelement eine Haltefläche vorgesehen ist. Geschickter Weise wird die Verstärkung an der der Haltefläche abgewandten Seite des Klinkenelementes angeordnet. Durch diese Ausgestaltung wird erreicht, dass die Verstärkung am Klinkenbereich an der optimal richtigen Stelle angeordnet ist. Für die Ausgestaltung der Verstärkung in diesem Bereich stehen mehrere Varianten zur Verfügung.

Zunächst ist vorgesehen, dass die Verstärkung als Umfaltung, insbesondere als endseitige Umfaltung des Materials des Klinkenträgers ausgebildet ist. Eine solche Umfaltung kann bei dem formgebenden Verformungsschritt der Rastbaugruppe beziehungsweise des Klinkenträgers in einfacher Weise mitrealisiert werden und führt letztendlich, ähnlich wie der Vorschlag des Einsatzes eines Stufenbleches, zu einer entsprechenden Materialverdopplung und somit zu einer Verstärkung.

Natürlich ist es möglich, verschiedene der hier beschriebenen Maßnahmen der Verstärkung miteinander zu kombinieren, zum Beispiel also eine erfindungsgemäß vorgeschlagene Umfaltung einzuprägen und hernach die Rastbaugruppe beziehungsweise zumindest den Klinkenbereich durch eine Wärmebehandlung in seiner Festigkeit zu verbessern. Solche kombinierten Maßnahmen zur Ausführung der Verstärkung gehören genauso zur Erfindung.

Der vorgenannte Vorschlag sieht insbesondere vor, dass durch die Umfaltung der Klinkenträger beziehungsweise die Rastbaugruppe einstückig ausgebildet ist und eine Verstärkung erfährt. Alternativ hierzu ist es möglich, dass die Verstärkung als separat eingesetzte Abstützung ausgebildet ist, die zum Beispiel in einem Klebe-, Löt- oder Schweißschritt an der gewünschten Stelle am Klinkenträger beziehungsweise der Rastbaugruppe angeordnet wird.

In einer nicht beanspruchten Variante ist vorgesehen, dass die Rastbaugruppe einstückig ausgestaltet beziehungsweise einteilig ausgebildet ist. Dabei besteht die Rastbaugruppe aus einem, bevorzugt homogenen, Material ohne hierauf die Erfindung zu beschränken. Es ist auch möglich, eine einstückige oder einteilige Ausgestaltung der Rastbaugruppe aus einer heterogenen Materialzusammensetzung zu realisieren, wobei dann geschickter Weise Federbereich und Klinkenbereich auf ihre jeweiligen Eigenschaften optimiert sind, insbesondere im Klinkenbereich eine Verstärkung vorgesehen ist. Dabei kann die Verstärkung zum Beispiel in einer speziellen Materialwahl des Klinkenbereiches oder Materialvergütung oder tatsächlich durch eine mechanische Ertüchtigung realisiert werden. Üblicher Weise umfasst der Begriff eines homogenen Materials auch Materialien mit gleichen Eigenschaften, es ist aber auch von einem heterogenen Material zu sprechen, wenn dieses zwar in seinen chemischen Eigenschaften keine Veränderungen erfährt, aber gleichwohl unterschiedliche Eigenschaften zum Beispiel aufgrund einer Wärmebehandlung partiell aufweist. Auch so ähnliche Vorschläge sind von dem erfindungsgemäßen Gedanken umfasst. Erfindungsgemäß besteht die Rastbaugruppe aus mindestens zwei Teilen, also eine zweiteilige Ausgestaltung der Rastbaugruppe gewählt wird. Dabei wird der Federbereich an einem Federteil und der Klinkenbereich an einem Klinkenteil realisiert, wobei Federteil beziehungsweise Klinkenteil als unabhängige, eigenständige Bauteile hergestellt sind, die aber in der Rastbaugruppe hernach zusammengebaut werden und zusammenwirken. Ein solcher zergliederter Aufbau der Rastbaugruppe hat den erheblichen Vorteil, dass an die Rastbaugruppe bezüglich ihrer verschiedenen Eigenschaften (federnd und haltend) jeweils optimiert ausgebildet ist und für die jeweilige Optimierung die geeigneten Maßnahmen unabhängig voneinander gewählt werden können. Für einen stabilen mechanischen Verbund werden dann die beiden Bauteile in geeigneter Weise miteinander verbunden, entweder mechanisch verstemmt, geklebt, verschweißt, verlötet oder durch ein drittes Element zusammengehalten.

So ist zum Beispiel vorgesehen, dass das Federteil aus einem gut federnden Material, zum Beispiel einem Federstahl oder einem Federdraht gebildet ist beziehungsweise das Federteil aus einem, zumindest kalt dauerhaft verformbaren Federstahl gebildet ist. Das Federteil ist in dieser Variante auf die federnde, elastische Eigenschaft optimiert.

Hiergegen besitzt zum Beispiel das Material des Klinkenteiles eine höhere Festigkeit auf Zugbeanspruchung, wie das Material des Federteiles, wodurch der erhöhten mechanischen Beanspruchung des Klinkenteiles, insbesondere im Klinkenbereich, Rechnung getragen ist.

In einer bevorzugten Ausgestaltung der Erfindung ist vorgesehen, dass das Klinkenteil beziehungsweise die Rastbaugruppe ein, insbesondere in Bewegungsrichtung des Kolbens, insbesondere als Verstärkung wirkendes Federelement aufweist. Dieses in Bewegungsrichtung des Kolbens wirkende Federelement hat Stoßdämpfereigenschaften. Daher wirkt es auch als Verstärkung im Sinne der Erfindung, um den auf den Klinkenbereich in der Verriegelungsstellung wirkenden mechanischen Schock etwas zu kompensieren und so die Lebensdauer der erfindungsgemäßen Verriegelungseinheit entsprechend zu erhöhen. Dabei ist klar, dass die Anordnung dieses Federelementes sowohl bei der einteilig ausgebildeten Rastbaugruppe, wie auch bei der ein Klinkenteil und ein Federteil aufweisenden, mehrteiligen Rastbaugruppe realisierbar ist.

Das Federelement ist zum Beispiel durch eine meanderförmige Ausgestaltung des Klinkenteiles beziehungsweise der Rastbaugruppe abschnittsweise realisiert, wobei dieses Federelement bevorzugt im Klinkenbereich oder Klinkenteil vorgesehen ist und so die federnde elastische Aufgabe des Federteiles, die eine andere Wirkrichtung aufweist, nicht beeinträchtigt. Dabei schließt die Erfindung eine entsprechende örtliche Überlagerung dieser beiden Eigenschaften nicht aus.

In der Zeichnung ist die Erfindung insbesondere in einem Ausführungsbeispiel schematisch dargestellt. Es zeigen:
Fig. 1a,1b,2a,2b : im Querschnitt, je eine Variante der erfindungsgemäßen Verriegelungseinheit (Variante 1 Fig. 1a, 1b, Variante 2 Fig. 2a,2b) in der Entriegelungsstellung (Fig. 1a,2a) beziehungsweise Verriegelungsstellung (Fig. 1b, 2b)
Fig. 3a, 3b, 3c beziehungsweise Fig. 4a, 4b, 4c : im Schnitt (Fig. 3a, 4a), in Unteransicht (Fig. 3b, 4b) sowie ein Detail (Fig. 3c, 4c) einer zweiteiligen Rastbaugruppe nach der Erfindung in zwei verschiedenen Ausführungsvarianten (Variante 1 Fig. 3a, 3b, 3c, Variante 2 Fig. 4a, 4b, 4c)
Fig. 5a, 5b beziehungsweise Fig. 6a, 6b : im Schnitt (Fig. 5b und 6b) sowie in Draufsicht (Fig. 5a beziehungsweise 6a) je eine nicht beanspruchte Variante einer einteiligen Rastbaugruppe, wobei

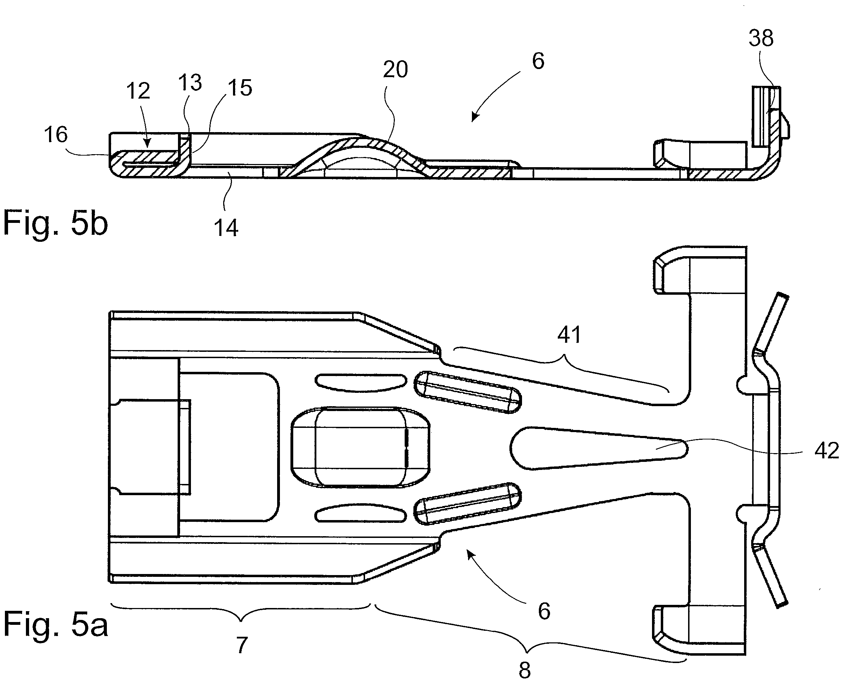

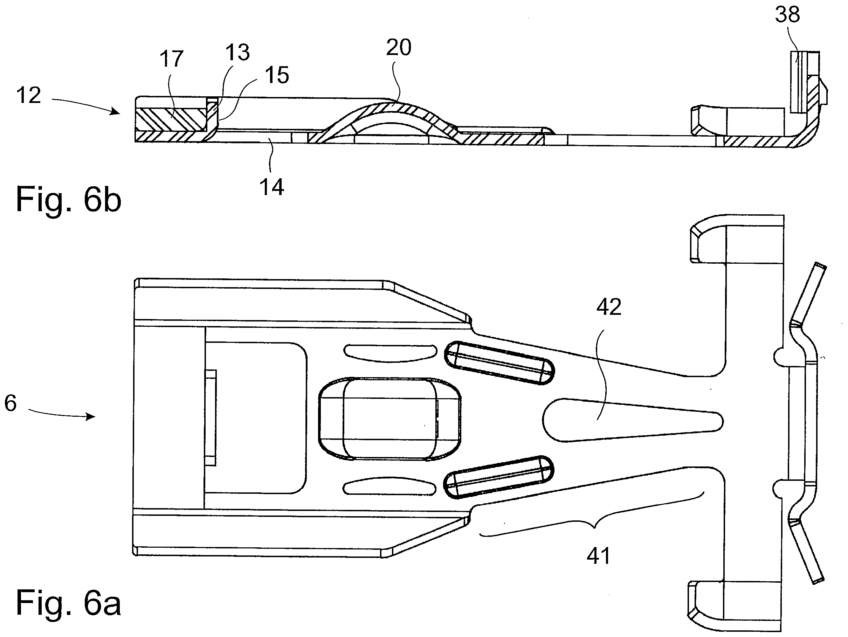

Fig. 5a, 5b eine erste Variante und Fig. 6a, 6b eine zweite Variante zeigt.

Die vorgenannte Variantennummerierung beschränken die Erfindung nicht, sie beschreiben nur die verschiedenen möglichen vielfältigen Varianten der Erfindung und beschreiben nicht ein einheitliches beschränkendes Realisierungskonzept der Verriegelungseinheit.

In den Figuren sind gleiche oder einander entsprechende Elemente jeweils mit den gleichen Bezugszeichen bezeichnet und werden daher, sofern nicht zweckmäßig, nicht erneut beschrieben.

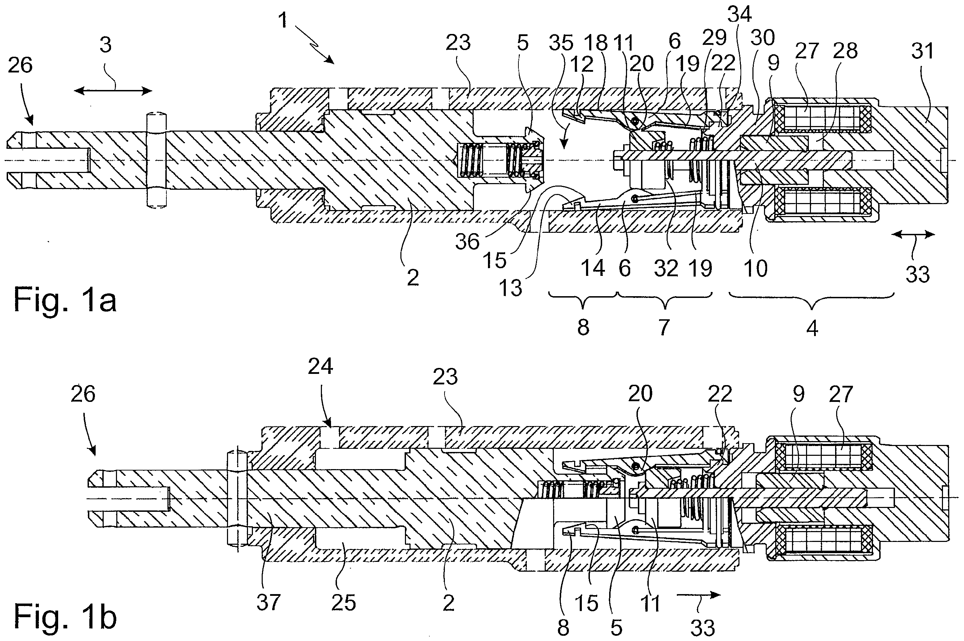

In Fig. 1a, 1b ist eine erste Variante der erfindungsgemäßen Verriegelungseinheit 1 gezeigt. Die Verriegelungseinheit 1 dient für das Verriegeln der Bewegung 3 eines von einem Antrieb bewegbaren Kolbens 2. Die Bewegung 3 des Kolbens 2 ist mit dem Doppelpfeil 3 gekennzeichnet. Der Kolben 2 ist dafür in einem Gehäuse 23 geführt und gelagert. Für die Bewegung 3 des Kolbens 2 ist zum Beispiel ein separater Antrieb vorgesehen oder aber der Kolben 2 ist Teil eines bevorzugt hydraulisch wirkenden Arbeitszylinders (alternativ ist natürlich auch ein pneumatischer Arbeitszylinder denkbar), der in Verbindung steht mit dem hydraulischen Kreislauf eines Automatikgetriebes. Über den Anschluss 24 wird der Druckraum 25 mit hydraulischem Druck des Systems beaufschlagt, wodurch der beweglich gelagerte Kolben 2 nach rechts versetzt wird, wie dies in Fig. 1b gezeigt ist. Dabei kommt dann das gabelartige Blockierelement 26 außer Eingriff mit entsprechenden Getriebeteilen des Fahrzeuges, die bei abgeschaltetem Motor (bei abgeschalteter Hydraulikpumpe beziehungsweise der Parkstellung) eine zusätzliche, insbesondere formschlüssige Verriegelung der Getriebeabtriebswelle erreicht.

In der Fahrstellung des mit der erfindungsgemäßen Verriegelungseinheit 1 ausgestatteten Fahrzeuges ist die gelöste Stellung der Parksperre entsprechend zu sichern, also zu verriegeln, was mit der erfindungsgemäßen Verriegelungseinheit 1 erfolgt. Die aktivierte Verriegelungseinheit ist in ihrer Verriegelungsstellung in Fig. 1b gezeigt.

Der Aufbau der Verriegelungseinheit 1 ist dadurch gekennzeichnet, dass sich an ihrem linken Ende der Kolben 2 beweglich gelagert befindet, der einen hakenartigen Kolbenkopf 5 aufweist. Rechts, am Kolben 2 anschließend, befindet sich dann die Rastbaugruppe 6, die in dem Gehäuse 23 im wesentlichen ortsfest (nicht axial, in der Bewegungsrichtung 3 des Kolbens 2, im Ganzen beweglich), aber zum Beispiel schwenkbar gelagert vorgesehen ist.

Die Rastbaugruppe 6 wirkt einerseits mit dem Kolbenkopf 5 beziehungsweise dem Kolben 2 und andererseits mit dem von dem Elektromagneten 4 bewegten Bolzen 11 zusammen. Aufgrund der Bewegung des Bolzens 11 kommt die Rastbaugruppe 6 in Wirkeingriff mit dem Kolben 2.

Dabei schließt sich der Elektromagnet 4 an der Rastbaugruppe 6 rechts, auf der dem Kolben 2 gegenüberliegenden Seite an.

Der Aufbau des Elektromagneten 4 ist wie üblich, der Elektromagnet 4 besitzt eine Spule 27 mit einer Vielzahl von stromdurchfließbaren Wicklungen. Durch den Stromfluß durch die Wicklungen der Spule 27 wird ein Magnetfeld erzeugt, welches auf die beweglichen Elemente des Elektromagneten 4, insbesondere auf den Anker 9 wirkt. Dabei wird durch die mit Strom beaufschlagten Spule 27 ein Magnetfeld erzeugt, welches versucht, den Anker 9 derart nach rechts zu versetzen, dass der Luftspalt 28 geschlossen ist. Dies erfolgt gegen die rückstellende Kraft einer Rückstellfeder 29. Die Rückstellfeder 29 befindet sich links, außerhalb des Elektromagneten 4, welcher durch das Joch 30 begrenzt wird.

Der Anker 9 ist in einer entsprechenden Bohrung des Joches 30 axial geführt und beweglich. Der Anker 9 trägt konzentrisch gelagert beziehungsweise angeordnet eine Ankerstange 10, die ihrerseits rechts vom Luftspalt 28, dem Joch 30 abgewandten Seite zusätzlich in einer Bohrung des Kernes 31 geführt ist. Dabei weist das Joch 30 eine Stufenbohrung auf, um somit nicht nur der Lagerung des Ankers 9, sondern auch der Lagerung der Ankerstange 10 zu dienen. In der hier gewählten Konstruktion überträgt die Ankerstange 10 die Bewegung des im Inneren des Elektromagneten 4 beweglich angeordneten Ankers 9 auf außerhalb des Elektromagneten 4, insbesondere links vom Joch 30, angeordneten Bauteile, wie zum Beispiel auf den auf der Ankerstange 10 angeordneten Bolzen 11.

Die Anordnung ist dabei so gewählt, dass zwischen der Rastbaugruppe 6 und dem Elektromagneten 4 das Joch 30 angeordnet ist und der Elektromagnet 4 auf der dem Joch 30 abgewandten Seite (bezogen auf die Spulenachse der Spule 27), die in dem Anwendungsbeispiel parallel zur Bewegungsrichtung 3 ist, von dem Kern 31 abgeschlossen wird.

Es ist klar, dass auf die spezielle Ausgestaltung des Elektromagneten 4 die Erfindung nicht beschränkt ist, sondern die erfindungsgemäße Verriegelungseinheit bei der Ausgestaltung des Elektromagneten 4, insbesondere in ihrer räumlichen Anordnung, sehr variabel ist. Dabei ist es durchaus auch in einer erfindungsgemäßen Variante möglich, dass der Anker 9 aus dem Spuleninneren der Spule 27 herausgeführt wird und auf den Einsatz einer separaten Ankerstange 10 verzichtet wird und der Bolzen 11 vom Anker 9 direkt getragen wird. Die Erfindung umfasst dabei auch eine Variante, bei welcher der Bolzen 11 mit der Ankerstange 10 beziehungsweise dem Anker 9 einstückig ausgebildet ist, also der Bolzen 11 nur einen funktionalen Abschnitt des Ankers 9 beziehungsweise der Ankerstange 10 bildet oder aber der Bolzen 11 ist als diskretes, eigen hergestelltes Element realisiert, welches in einem entsprechenden Montageschritt auf den Anker 9 beziehungsweise die Ankerstange 10 aufgebaut wird. Letzteres ist vorteilhaft, weil die Rückstellfeder 29 sich einerseits außerhalb vom Elektromagneten 4 an der dem Elektromagneten 4 abgewandten Seite des Joches 30 und andererseits an der dem Elektromagneten 4 zugewandten Anlagefläche 32 des Bolzen 11 abstützt. Die Montage erfolgt dabei so, dass die fertige Baugruppe Elektromagnet 4, die die durch die Bohrung des Joches 30 geführte Ankerstange 10 aufweist, auf die dann die Rückstellfeder 29 aufsetzbar ist und dann auf die Ankerstange 10 abschließend der Bolzen 11 aufgesetzt und in axialer Richtung festgelegt, zum Beispiel verstemmt wird.

In dem hier gezeigten Ausführungsbeispiel weist die erfindungsgemäße Verriegelungseinheit 1 mehrere einzelne Rastbaugruppen 6 auf. Zum Beispiel sind in Umfangsrichtung um die Ankerstange 10 herum drei Rastbaugruppen 6 angeordnet, wobei für eine gleichmäßige Belastung, bevorzugt eine konzentrische Anordnung vorgesehen ist. In Umfangsrichtung sind die einzelnen Rastbaugruppen zueinander jeweils äquidistant angeordnet und daher idealer Weise alle gleichartig belastet.

Die Rastbaugruppe 6 ist in axialer Richtung (was parallel ist zur Bewegungsrichtung 3 des Kolbens 2 beziehungsweise zur Bewegungsrichtung 33 des Ankers 9) festgelegt, gleichwohl aber an dem Träger 22 schwenkbar oder klappbar und somit insofern radial beweglich gelagert. Der Träger 22 ist dabei in dem hier gezeigten Ausführungsbeispiel ein Teil des Joches 30. Die Rastbaugruppe 6 erstreckt sich dabei in axialer Richtung und ist deutlich längsgestreckt. Bezogen auf den Innendurchmesser des Gehäuses 23, in welchem die Rastbaugruppe 6 angeordnet ist, ist die Länge der Rastbaugruppe 6 größer als der Innendurchmesser, bevorzugt mindestens 1,5 oder 2 Innendurchmessern des Gehäuses 23.

Die in Fig. 1a, b gezeigte Rastbaugruppe 6 der erfindungsgemäßen Verriegelungseinheit 1 ist gebildet von einem Federbereich 7 und einem Klinkenbereich 8.

Der Federbereich 7 schließt sich an dem Lagerbereich 34 an. Am Lagerbereich 34 ist die Rastbaugruppe 6 mit dem Träger 22 verbunden. An dem dem Lagerbereich 34 gegenüberliegenden Ende der Rastbaugruppe 6 befindet sich der Klinkenbereich 8.

In dem hier gezeigten Ausführungsbeispiel ist die Rastbaugruppe 6 mehrteilig, insbesondere zweiteilig, ausgebildet. Dabei ist der Federbereich 7 in einem eigenständigen Bauteil, dem Federteil 19, realisiert. Der Klinkenbereich 8 wird dabei ebenfalls von einem eigenständigen Bauteil, dem Klinkenteil 18, gebildet. Insbesondere ist bei einer zweiteiligen Ausgestaltung der Rastbaugruppe 6 eine räumliche Überlappung von Federbereich 7 und Klinkenbereich 8 möglich, da die einzelnen Bauteile, das Klinkenteil 18 und das Federteil 19, sich in axialer Richtung in gleichen Bereichen erstrecken. Dies ist kein Widerspruch zur Erfindung, da der funktionale Bereich, Federbereich 7 beziehungsweise Klinkenbereich 8, jeweils durch getrennte Bauteile realisiert wird, die auf die jeweilige Aufgabe optimal angepasst sind. Bei einer einstückigen Ausgestaltung können sich diese Bereiche gleichwohl auch zumindest teilweise überlappen.

Die Aufgabe des Federteiles 19 liegt darin, auf die Rastbaugruppe 6 eine ausreichende Vorspannung derart einzuprägen, dass die Rastbaugruppe 6 in Richtung des Koblens 2 beziehungsweise des Kolbenkopfes 5 schwenken möchte. Dies wird durch eine entsprechende Elastizität des Federbereiches 7 beziehungsweise des Federteiles 19 erreicht. Das Federteil 19 ist zum Beispiel als diskrete Feder, zum Beispiel aus einem Federdraht oder als federndes Bauteil aus einem Federstahl oder ähnlichem gebildet. Der Lagerbereich 34 dient letztendlich als Lagerbeziehungsweise Drehpunkt für die Rastbaugruppe 6. Die Rastbaugruppe 6 ist in Richtung auf den Kolbenkopf 5 hin vorgespannt. Diese Anstellbewegung, die aus dem Federbereich 7 beziehungsweise Federteil 19 ist mit dem Pfeil 35 angedeutet, es handelt sich hierbei um eine Verschwenkbewegung um den Lagerbereich 34. Aufgrund der Vorspannung, die aus dem Einsatz des Federbereiches 7 beziehungsweise dem Federteil 19 resultiert, liegt die Rastbaugruppe 6 auf dem Bolzen 11 auf. Dabei besitzt die Rastbaugruppe 6 einen Nocken 20, der auf der Mantelfläche des Bolzens 11 entsprechend der axialen Stellung des Bolzens 11 entlanggleitet. In Bereichen größeren Durchmessers bewirkt der Bolzen 11 ein Hinausdrücken, also eine radial nach Außen gerichtete Bewegung der Rastbaugruppe 6, der an der Rastbaugruppe 6 vorgesehene Klinkenbereich 8 wird von dem Kolbenkopf 5 radial entfernt.

Der Begriff radial bezieht sich dabei auf die axiale Richtung, die durch die Bewegungsrichtung 3 des Kolbens beziehungsweise der hierzu parallelen Bewegungsrichtung 33 des Ankers 9 vorgegeben ist.

Der wirksame Durchmesser des kegeligen Bolzens 11, der mit dem Nocken 20 in Wirkkontakt steht, ist abhängig von der axialen Lage der Ankerstange 10. Der Bolzen 11 ist fest mit der Ankerstange 10 verbunden, ihrerseits ist die Ankerstange 10 fest mit dem Anker 9 verbunden. Somit hängt die axiale Position des Bolzens 11 von der axialen Lage des Ankers 9 im Elektromagneten 4 ab die, wenn nun kein Strom durch die Spule 27 fließt, wie in Fig. 1a gezeigt, drückt die Rückstellfeder 29, die Anordnung von Anker 9, Ankerstange 10 und Bolzen 11 nach links und somit die Rastbaugruppe nach außen.

In der in Fig. 1b gezeigten Stellung ist die Spule 27 mit Strom beaufschlagt, wodurch der Anker 9 nach rechts versetzt, wodurch auch der Bolzen 11 nach rechts gleitet. Der Nocken 20 gleitet am vorderen Ende des Bolzens 11 entlang, wo dieser einen kleineren Durchmesser aufweist. Aufgrund der in die Rastbaugruppe 6 eingeprägten Vorspannung, behindert der zurückgezogene Bolzen 11 dann das Hereinschwenken der Rastbaugruppe 6 nicht mehr, der Klinkenbereich 8 kommt in dem Wirkbereich mit dem Kolbenkopf 5.

Die Anordnung ist dabei so gewählt, dass die Rastbaugruppe 6 mit ihrem Lagerbereich 34 an dem Träger 22, das Teil des Joches 30 ist, beweglich, insbesondere verschwenkbar, zumindest flexibel oder elastisch verbiegbar gelagert ist, wodurch der Klinkenbereich 8 in einer bezüglich der Bewegungsrichtung des Kolbens 2 rechtwinkligen, spitzwinkligen oder radialen Verschwenkbewegung gegen den Kolben 2 beziehungsweise den Kolbenkopf 5 anstellbar ist.

Der Kolben 2, insbesondere der Kolbenkopf 5 des Kolbens 2, besitzt eine Hinterschneidung, einen Absatz, Kragen, Ring, Vorsprung oder Haltenase 36, die mit den Elementen des Klinkenbereiches 8 zumindest kraftschlüssig oder auch formschlüssig zusammenwirkt.

Sowohl bei der einteiligen, wie bei der zwei- beziehungsweise mehrteiligen Ausgestaltung der Rastbaugruppe 6, wird der Klinkenbereich 8 beziehungsweise das Klinkenteil 18 von einem sich längs erstreckenden Klinkenträger 14 und einem sich an dem Klinkenträger 14 rechtwinklig oder winklig, insbesondere in Richtung auf den Kolben 2 hin vorstehenden Klinkenelement 13 gebildet. Das Klinkenelement 13 ist dabei zum Beispiel gebildet von einem Haken, Klinke, Vorsprung, Absatz, Raste oder ähnlichem. Die erfindungsgemäß vorgesehene Verstärkung 12 befindet sich bevorzugt im Klinkenbereich 8. In dem in Fig. 1a, b gezeigten Ausführungsbeispiel ist die Verstärkung 12, insbesondere in der zweiteiligen Ausgestaltung der Rastbaugruppe 6 realisiert, bei welchem das Klinkenteil 18 eine erheblich höhere Zugfestigkeit aufweist, wie das Federteil 19, wobei das Klinkenteil 18 eine deutlich geringere Federneigung hat als das Federteil 19. Durch eine Teilung der Funktionalitäten Klinke und Federn in die beiden einzelnen, diskreten Bauteile Federteil 19 und Klinkenteil 18, ist es möglich in einfacher Weise die Verstärkung 12 in einer verstärkten Ausgestaltung des Klinkenteiles 18 durch eine entsprechend massivere Realisierung des Klinkenteiles 18 umzusetzen.

Die Funktionsweise der erfindungsgemäßen Verriegelungseinheit 1 ist wie folgt.

In der in Fig. 1a gezeigten Entriegelungsstellung ist die Verriegelungseinheit 1 nicht in Eingriff mit dem Kolben 2 beziehungsweise dem Kolbenkopf 5. Vielmehr ist in der bezüglich der Verriegelungseinheit 1 gezeigten Entriegelungsstellung, das an den Kolben 2, dem Kolbenkopf 5 abgewandten Seite angeordnete Blockierelement 26, im entsprechenden Eingriff, im Getriebestrang des Fahrzeuges, wenn zum Beispiel die erfindungsgemäße Verriegelungseinheit 1 als Parksperre verwendet wird. Die Parksperre ist zum Beispiel bei abgestelltem Fahrzeug aktiv, der Motor ist aus, der hydraulische Kreislauf des Automatikgetriebes steht nicht unter Druck. Da kein elektrischer Verbraucher in dieser Stellung aktiv ist beziehungsweise aktiv sein soll, um Energie zu sparen, sind auch die Wicklungen der Spule 27 nicht mit Strom beaufschlagt, daher ist auch kein Magnetfeld am Elektromagneten 4 aktiv. Somit wirkt nur die Rückstellfeder 29. Daher ist der Bolzen 11 derart nach links versetzt, wodurch der Bolzen die Nocken 20 der Rastbaugruppe 6 radial nach Außen drückt und die Entriegelungsstellung dadurch definiert, dass der Klinkenbereich 8 nicht in Eingriff mit dem Kolbenkopf 5 steht. Der Kolben 2 wird durch Restdruck im Gehäuseinneren nach links versetzt.

In der Fahrstellung des Fahrzeuges ist das Blockierelement 26 aus dem Getriebestrang zu entfernen. Dies erfolgt durch eine entsprechende Druckbeaufschlagung des Druckraumes 25 zum Beispiel mit dem Systemdruck des Hydraulikkreislaufes des Automatikgetriebes, durch welchen der Kolben 2 in das Gehäuse 23 hineingeschoben wird beziehungsweise die Kolbenstange 37, die das Blockierelement 26 trägt, in das Gehäuse 23 eintaucht. In dieser Fahrstellung ist nun die Lage des Kolbens zu sichern, um sicherzustellen, dass nicht versehentlich das Blockierelement 26 in den Getriebestrang gelangt. Dies wird durch die in Fig. 1b gezeigte Verriegelungsstellung der Verriegelungseinheit 1 erreicht, bei welcher nun die Wicklungen der Spule 27 mit Strom beaufschlagt sind, wodurch sich ein Magnetfeld ausbildet, das den Anker 9 entgegen der Kraft der Rückstellfeder 29 nach rechts, zur Überbrückung des Luftspaltes 28 versetzt und so den Bolzen 11 axial versetzt, um diesen außer Eingriff von den Nocken 20 der Rastbaugruppe 6 zu bringen. Die in die Rastbaugruppe 6 durch den Federbereich 7 beziehungsweise dem Federteil 19 eingeprägte Vorspannung schwenkt oder klappt die gesamte Rastbaugruppe 6 nach Innen, so dass der Klinkenbereich 8, insbesondere das an dem Klinkenträger 14 vorgesehene Klinkenelement 13, in die Hinterschneidung oder Haltenase an dem Kolbenkopf 5 gelangt und so die axiale Lage des Kolbenkopfes 5 und somit auch des Kolbens 2 festlegt. Mögliche Druckschwankungen im hydraulischen Kreislauf des Automatikgetriebes sind dann für die Stellung des Kolbens 2 unerheblich solange die Spule 27 mit Strom beaufschlagt ist, ist gewährleistet, dass das Blockierelement 26 nicht in den Getriebeabtrieb eingreift.

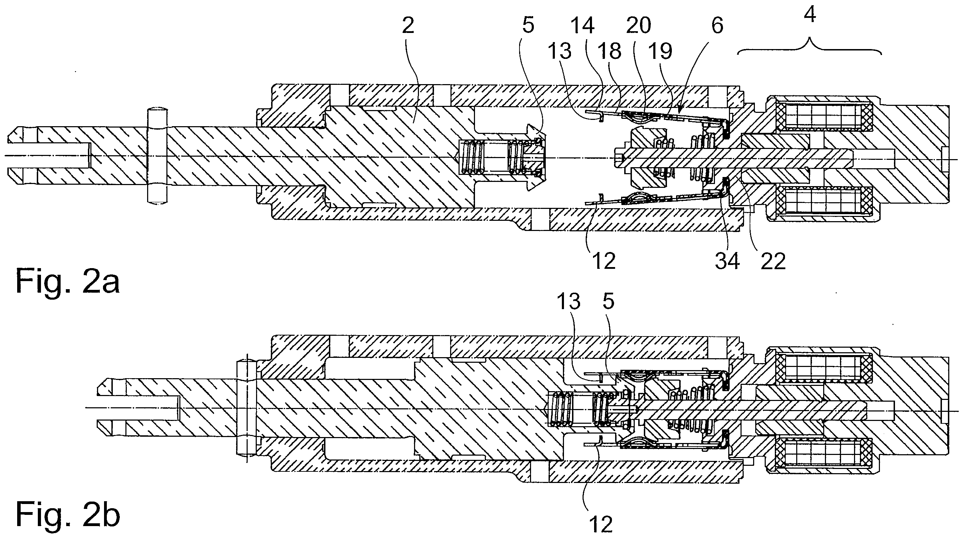

In Fig. 2a, 2b ist der gleiche Aufbau der erfindungsgemäßen Verriegelungseinheit 1 gezeigt, wie in Fig. 1a, 1b. Die Ausgestaltung der Rastbaugruppe 6 unterscheidet sich allerdings, weswegen hier verstärkt auf dieses Merkmal eingegangen wird. In Fig. 1a, 1b ist die zweiteilige Rastbaugruppe 6 gebildet aus einem aus verhältnismäßig stabilem oder dickem Material gefertigten Klinkenteil 18 und einem Federteil 19, das zum Beispiel als Spiralfeder oder aus Federdraht realisierbar ist. Der sich am Bolzen 11 abstützende Nocken 20 der Rastbaugruppe 6 ist in Fig. 1a, 1b von dem stabilen Klinkenteil 18 gebildet. In dem in Fig. 2a, 2b gezeigten Ausführungsbeispiel ist es alternativ möglich, dass der Nocken 20 von dem Federteil 19 mitrealisiert wird oder ebenfalls von dem Klinkenteil 18 gebildet ist.

Wiederum ist die Rastbaugruppe 6 zweiteilig ausgebildet, wobei der Klinkenbereich 8, der durch das separate Klinkenteil 18 gebildet ist, eine Verstärkung 12 aufweist, die zum Beispiel in der entsprechenden Materialwahl und/oder weiteren konstruktiven Varianten besteht. Grundsätzlich ist es möglich, die Verstärkung 12 durch ein entsprechend härteres, widerstandsfähigeres Material des Klinkenteiles 18 zu bewirken, um die dauernden Schläge des Kolbens 2 auf das Klinkenelement 13 dauerhaft zu widerstehen und somit die Lebensdauer der erfindungsgemäßen Verriegelungseinheit zu erhöhen.

In Fig. 1a, 1b ist das Klinkenteil 18 zum Beispiel als Schmiede- oder Gußelement ausgebildet, wodurch sich eine entsprechend größere Materialdicke realisieren lässt. Es ist aber auch möglich, dieses Klinkenteil aus einem gezogenen beziehungsweise gewalzten Material herzustellen.

Bei der Variante nach der Fig. 2a, 2b ist das Klinkenteil aus einem Band- oder Flachmaterial gebildet, das ebenfalls in einem Umformschritt bevorzugt kalt verformt worden ist. Durch die funktionale Entkoppelung des Federbereiches 7 und des Klinkenbereiches 8 in zwei voneinander getrennte Bauteile sind die jeweiligen Bauteile auf ihre spezielle Funktion optimierbar. So übernimmt dann das ebenfalls aus einem Band- oder Flachmaterial gebildete Federteil 19 die Vorspannfunktion, um genauso wie in Fig. 1a, 1b ein nach innen, in Richtung des Kolbenkopfes 5 resultierende Kraft oder Drehmoment auf die Rastbaugruppe 6 einzuprägen. An dem Federteil 19 ist die Rastbaugruppe 6 dann auch am Träger 22 im Lagerbereich 34 gelenkig angeschlossen, wozu es einen separaten Haltering oder Verstemmung oder ähnliches gibt.

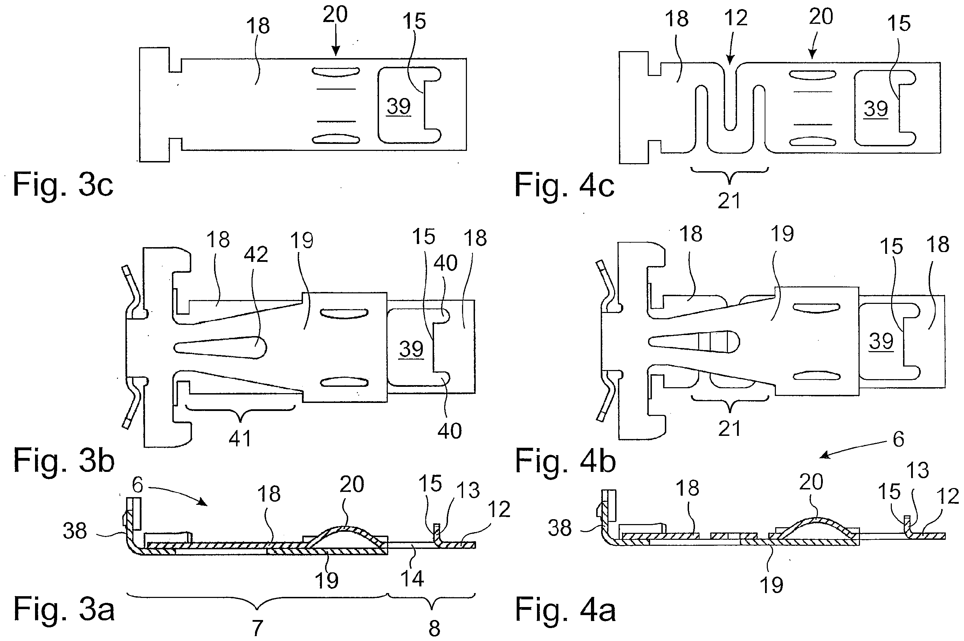

In Fig. 3a, 3b, 3c beziehungsweise 4a, 4b, 4c sind zwei verschiedene varianten einer zweiteiligen Rastbaugruppe 6 gezeigt.

Mit 38 ist der Fußbereich der Rastbaugruppe 6 gezeigt, bei welchem die Rastbaugruppe 6 im Lagerbereich 34 am Träger 22 angeschlossen ist. Der Fußbereich 38 ist dabei Teil des Federteiles 19 der zweiteilig ausgebildeten Rastbaugruppe 6. Hierzu steht der Fußbereich 38 rechtwinklig von der sich längs erstreckenden Rastbaugruppe 6 ab, die Abwinklung ist dabei auf der gleichen Seite wie das Klinkenelement 13 an der Rastbaugruppe 6 angeordnet.

Die beiden Bauteile, Klinkenteil 18 und Federteil 19, werden getrennt voneinander hergestellt und in geeigneter Weise zur Rastbaugruppe 6 verbunden, wobei zum Beispiel eine Lötverbindung, eine mechanische Verstemmung oder eine sonstige ausreichend stabile Verbindung zwischen den Teilen vorgesehen ist.

Das Klinkenteil 18 ist in seiner Längserstreckung etwas größer, das heißt länger, wie das Federteil 19. Es bildet im mittleren Bereich den nach innen vorstehenden Nocken 20 auf, der Nocken 20 ist daher auf der gleichen Seite angeordnet, wie der abgewinkelte Fußbereich 38 oder das Klinkenelement 13.

Wie sich insbesondere aus der Unteransicht in Fig. 3b ergibt, besitzt das Klinkenteil 18 an dem dem Fußbereich 38 abgewandten Ende eine Ausstanzung 39, an deren im Fußbereich 38 abgewandten Seite das Klinkenelement 13 von dem sich längs erstreckenden Klinkenträger 14 absteht. Das Klinkenelement 13 bildet auf der der Ausstanzung 39 zugewandten Seite eine Haltefläche 15 aus, die mit der Haltenase, Raste, Vorsprung oder sonstigem Halteelement des Kolbenkopfes 5 zumindest kraftschlüssig, wenn nicht sogar formschlüssig, zusammenwirkt. Über die Haltefläche 15 wird also die Haltekraft in der Verriegelungsstellung von der Rastbaugruppe 6 in den Kolben 2 eingeprägt. Bevorzugter Weise befindet sich auch in diesem Bereich, dem Klinkenbereich 8, auch eine Verstärkung 12, die sowohl durch eine entsprechende materielle Ertüchtigung oder mechanische Verstärkung gebildet ist.

Fig. 3c zeigt das Klinkenteil 18 als ein separates, einzelnes herstellbares Bauteil.

Die Ausstanzung 39 weist dabei seitlich neben dem umgebogenen Klinkenelement 13 mit Ausnehmungen 40 auf, die ebenfalls der Verstärkung dienen, das heißt, eine Kerbwirkung zwischen dem umgebogenen Klinkenelement 13 und dem Klinkenträger 14 vorbeugt.

Im Vergleich zwischen Fig. 3c und Fig. 4c ist auch der Unterschied zwischen diesen beiden Varianten der Ausgestaltung einer Rastbaugruppe 6 nach der Erfindung gezeigt. Zwischen dem Nocken 20 und dem Fußbereich 38 ist in der Variante nach Fig. 4a, 4b, 4c noch ein axial beziehungsweise in Bewegungsrichtung 3 des Kolbens 2 wirkendes Federelement 21 vorgesehen. Alternativ ist dieses Federelement 21 auch als Verstärkung 12 im Sinne der Erfindung einsetzbar, da es eine schockabsorbierende und daher verstärkende Eigenschaft besitzt. Realisiert wird die Ausgestaltung des Federelementes 21 durch eine meanderförmige Struktur beziehungsweise Ausstanzung 39 in dem Flachmaterial des Klinkenteiles 18. Bevorzugt ist dabei das Material des Klinkenteils 18 als Federstahl und ähnliches realisiert.

Um die Federeigenschaft des Federteils 19 zu verbessern, ist das Federteil 19 im mittleren Bereich 41 trapezförmig verjüngt ausgebildet und besitzt mittig eine längsverlaufende Ausstanzung 42. Durch diese Geometrie wird die federnde Eigenschaft entsprechend unterstützt. Der mittlere Bereich 41 befindet sich dabei zwischen dem Nocken 20 und dem Fußbereich 38.

Fig. 5a, 5b zeigt eine im Wesentlichen einstückige Ausgestaltung der Rastbaugruppe 6. Dabei teilt sich die Rastbaugruppe 6 in den Federbereich 7 und den Klinkenbereich 8 auf, wobei sich der Federbereich 7, insbesondere an dem Fußbereich 38 anschließt und einen trapezartig verlaufenden Mittelbereich 41, ähnlich wie bei Fig. 3b oder Fig. 4b, aufweist. Die Ausstanzung 42 ist in gleicher Weise vorgesehen. Der Federbereich 7 erstreckt sich dabei zwischen dem Nocken 20 und dem Fußbereich 38.

Einstückig an dem Federbereich 7, auf der dem Fußbereich 38 abgewandten Seite, schließt sich der Klinkenbereich 8 an. Die Verstärkung 12 befindet sich dabei auf der der Haltefläche 15 abgewandten Seite des Klinkenelementes 13. Die Verstärkung 12 wird in dem hier gezeigten Ausführungsbeispiel durch eine Umfaltung 16 des Materials der Rastbaugruppe 6 gebildet.

Das Material der Rastbaugruppe 6, die hier einteilig ausgeführt ist, ist zum Beispiel gebildet von einem als Flach- oder Bandmaterial zur Verfügung stehenden Federstahl in einer Dicke von 0,5 mm, 0,7 mm, 0,9 mm oder 1 mm Stärke. Aus dem vergleichbaren Material ist es auch möglich, das Federteil 19 beziehungsweise Klinkenteil 18 bei einer zwei- oder mehrteiligen Ausgestaltung der Rastbaugruppe 6 zu realisieren. Geschickter Weise wird dann zur Erhöhung der Festigkeit des Klinkenteiles die Materialstärke des Klinkenteiles zur Bildung der Verstärkung 12 erhöht.

Fig. 6a, 6b zeigt eine weitere Variante einer einteiligen Rastbaugruppe 6, die im Aufbau dem in Fig. 5a, 5b gezeigten Beispiel stark ähnelt. In dem hier gezeigten Ausführungsbeispiel ist die Verstärkung 12 gebildet durch eine Abstützung 17, die sich auf der der Haltefläche 15 abgewandten Seite des Klinkenelementes 13 anschließt. Die Abstützung 17 ist dabei als separates Abstützelement ausgebildet und in den Rücken des Klinkenelementes 13 eingesetzt. Eine stabile Befestigung ergibt sich zum Beispiel durch ein Einstemmen, also einem mechanischen Verbund oder aber durch ein Einkleben, Einschweißen oder Verlöten.

## Patentansprüche

1. Verriegelungseinheit für das Verriegeln der Bewegung (3) eines von einem Antrieb bewegbaren Kolbens (2), wobei die Verriegelungseinheit einen Elektromagneten (4) und eine Rastbaugruppe (6) mit einem Federbereich (7) und einem Klinkenbereich (8) umfasst, wobei der elastische Federbereich (7) die Rastbaugruppe (6) gegen einen Anker (9) beziehungsweise eine Ankerstange (10) des Elektromagneten (4) oder gegen einen vom Anker (9) beziehungsweise der Ankerstange (10) gehaltenen Bolzen 11 derart anstellt, dass in einer Verriegelungsstellung der Klinkenbereich (8) die Bewegung (3) des Kolbens (2) blockiert, wobei in einer Entriegelungsstellung die Bewegung (3) des Kolbens (2) freigegeben ist und der Klinkenbereich (8) eine zumindest in Bewegungsrichtung (3) des Kolbens (2) wirkende Verstärkung (12) aufweist, **dadurch gekennzeichnet, dass** die Rastbaugruppe (6) mindestens zweiteilig ausgestaltet ist, wobei der Federbereich (7) an einem Federteil (19) und der Klinkenbereich (8) an einem Klinkenteil (18) vorgesehen ist und Federteil (19) beziehungsweise Klinkenteil (18) als unabhängig hergestellte, in der Rastbaugruppe (6) zusammenwirkende Bauteile ausgebildet sind und das Federteil (19) aus Federstahl oder Federdraht gebildet ist.

2. Verriegelungseinheit nach Anspruch 1, **dadurch gekennzeichnet, dass** die Verstärkung (12) gebildet ist durch eine durch Wärmebehandlung hervorgerufene Erhöhung der spezifischen Festigkeit des Materials, zumindest des Klinkenbereiches (8).

3. Verriegelungseinheit nach Anspruch 2, **dadurch gekennzeichnet, dass** sich durch die Wärmebehandlung, die bevorzugt einem Verformungsschritt bei der Herstellung der Rastbaugruppe nach folgt, eine relative Festigkeitserhöhung von mindestens 4 %, bevorzugt mindestens 5 % ergibt.

4. Verriegelungseinheit nach einem oder mehreren der vorhergehenden Ansprüche, **dadurch gekennzeichnet, dass** sich die gesamte Rastbaugruppe (6) aus einem zumindest kalt, dauerhaft verformbaren Federstahl gebildet ist.

5. Verriegelungseinheit nach einem oder mehreren der vorhergehenden Ansprüche, **dadurch gekennzeichnet, dass** die Verstärkung (12) gebildet ist durch eine Erhöhung der Materialdicke des den Klinkenbereich (8) bildenden Materials und/oder der Klinkenbereich (8) zumindest gebildet ist von einem Klinkenelement (13) und einem Klinkenträger (14), wobei das Klinkenelement (13) rechtwinklig oder winklig in Richtung zu dem Kolben (2) hin am Klinkenträger (14) absteht.

6. Verriegelungseinheit nach Anspruch 5, **dadurch gekennzeichnet, dass** das Klinkenelement (13) eine in der Verriegelungsstellung mit dem Kolben (2) zusammenwirkende Haltefläche (15) aufweist und sich die Verstärkung (12) am Klinkenbereich (8) an der der Haltefläche (15) abgewandten Seite des Klinkenelementes (13) befindet.

7. Verriegelungseinheit nach Anspruch 5, **dadurch gekennzeichnet, dass** die Verstärkung (12) als Umfaltung (16), insbesondere als endseitige Umfaltung (16) des Materials des Klinkenträgers (14) oder als separat eingesetzte Abstützung (17) ausgebildet ist.

8. Verriegelungseinheit nach einem oder mehreren der vorhergehenden Ansprüche, **dadurch gekennzeichnet, dass** das Federteil (19) aus gut federndem Material beziehungsweise aus einem, zumindest kalt dauerhaft verformbaren Federstahl gebildet ist.

9. Verriegelungseinheit nach einem oder mehreren der vorhergehenden Ansprüche, **dadurch gekennzeichnet, dass** das Material des Klinkenteiles (18) eine höhere Festigkeit auf Zugbeanspruchung aufweist als das Material des Federteiles (19).

10. Verriegelungseinheit nach einem oder mehreren der vorhergehenden Ansprüche, **dadurch gekennzeichnet, dass** das Klinkenteil (18) beziehungsweise die Rastbaugruppe (6) ein in Bewegungsrichtung (3) des Kolbens (2) als Verstärkung (12) wirkendes Federelement (21) aufweist.

11. Verriegelungseinheit nach einem oder mehreren der vorhergehenden Ansprüche, **dadurch gekennzeichnet, dass** die Rastbaugruppe (6) an einem Träger (22) beweglich gelagert ist, derart, dass der Klinkenbereich (8) in einer bezüglich der Bewegungsrichtung (3) des Kolbens (2) rechtwinkligen oder spitzwinkligen Richtung gegen den Kolben (2) anstellbar ist.

12. Verriegelungseinheit nach Anspruch 5, **dadurch gekennzeichnet, dass** der Kolben (2) einen mit dem Klinkenbereich (8) beziehungsweise Klinkenelement (13) zusammenwirkenden Absatz, Kragen, Ring, Vorsprung oder eine Haltenase aufweist.

13. Verriegelungseinheit nach Anspruch 5, **dadurch gekennzeichnet, dass** das Klinkenelement (13) gebildet ist von einem Haken, einer Klinke, einem Vorsprung oder einem Absatz.

14. Verriegelungseinheit nach Anspruch 11, **dadurch gekennzeichnet, dass** die Verriegelungseinheit (1) ein Gehäuse (23) aufweist, in welchem der Träger (22) relativ ortsfest zum Gehäuse (23) und zur Rastbaugruppe (6) angeordnet ist.

## Claims

1. Locking unit for locking the movement (3) of a piston (2) driven by a drive, wherein the locking unit comprises a solenoid (4) and a catch assembly (6) with a spring area (7) and a latch area (8), wherein the elastic spring area (7) angles the catch area (6) against an armature (9) or an armature rod (10) of the solenoid (4) or against a bolt (11) held by the armature (9) or the armature rod (10) in such a way that in a locking position the latch area (8) blocks the movement (3) of the piston (2), wherein in an unlocking position the movement (3) of the piston (2) is released, and the latch area (8) has an enforcement (12) acting at least in the direction of movement (3) of the piston (2), **characterized in that** the catch assembly (6) is designed as at least two parts, wherein the spring area (7) is provided at a spring part (19), and the latch area (8) is provided at a latch part (18), and the spring part (19) or the latch part (18) are designed as independently fabricated assemblies interacting in the catch assembly (6), and the spring part (19) is made up of spring steel or spring wire.

2. Locking unit according to claim 1, **characterized in that** the enforcement (12) is shaped by increasing the specific strength of the material, at least of the latch area (8), caused by thermal treatment.

3. Locking unit according to claim 2, **characterized in that** the thermal treatment, preferably following after a deformation step during fabrication of the catch assembly, results in a relative increase of the strength of at least 4 %, preferably at least 5 %.

4. Locking unit according to one or more of the preceding claims, **characterized in that** the entire catch assembly (6) is made up of spring steel that can be at least cold-formed permanently.

5. Locking unit according to one or more of the preceding claims, **characterized in that** the reinforcement (12) is formed by increasing the thickness of the material forming the latch area (8), and/or the latch area (8) is made up of at least a latch element (13) and a latch carrier (14), wherein the latch element (13) sticks rectangularly or angled out of the latch carrier (14) towards the piston (2).

6. Locking unit according to claim 5, **characterized in that** the latch element (13) has a retaining surface (15) interacting in the locking position with the piston (2), and the reinforcement (12) is located at the latch area (8) on the side of the latch element (13) opposite the retaining surface (15).

7. Locking unit according to claim 5, **characterized in that** the reinforcement (12) is designed as folding (16) at the end of the material of the latch carrier (14) or as separately inserted support (17).

8. Locking unit according to one or more of the preceding claims, **characterized in that** the spring part (19) is formed of well-sprung material, or of spring steel that can be at least cold-formed permanently.

9. Locking unit according to one or more of the preceding claims, **characterized in that** the material of the latch part (18) has a higher strength when tensile stressed than the material of the spring part (19).

10. Locking unit according to one or more of the preceding claims, **characterized in that** the latch part (18) or the catch assembly (6) has a spring element (21) acting as reinforcement (12) in the direction of movement (3) of the piston (2).

11. Locking unit according to one or more of the preceding claims, **characterized in that** the catch assembly (6) is mounted movably on a carrier (22) in such a way that the latch area (8) can be angled against the piston (2) in a direction that is rectangular or acute with respect to the direction of movement (3) of the piston (2).

12. Locking unit according to claim 5, **characterized in that** the piston (2) has a ledge, collar, ring, projection, or retaining lug interacting with the latch area (8) or the latch element (13).

13. Locking unit according to claim 5, **characterized in that** the latch element (13) is made up of a hook, latch, projection, or ledge.

14. Locking unit according to claim 11, **characterized in that** the locking unit (1) has a housing (23) where the carrier (22) is arranged stationarily with respect to the housing (23) and the catch assembly (6).

## Revendications

1. Unité de verrouillage, destinée à verrouiller le mouvement (3) d'un piston (2) pouvant être déplacé par une commande, comprenant un électroaimant (4) et un assemblage d'enclenchement (6) avec une zone de ressort (7) et une zone de loquet (8), construite de façon à ce que la zone de ressort élastique (7) appuie l'assemblage d'enclenchement (6) contre un induit (9) ou une tige d'induit (10) de l'électroaimant (4) ou contre un boulon (11) maintenu par l'induit (9) ou par une tige d'induit (10) de sorte que, en position verrouillée, la zone de loquet (8) bloque le mouvement (3) du piston (2), et en position déverrouillée, le mouvement (3) du piston (2) est libéré, et la zone de loquet (8) comporte un renforcement (12) agissant au moins en direction du mouvement (3) du piston (2), **caractérisée en ce que** l'assemblage d'enclenchement (6) est construit en partie d'au moins deux éléments avec la zone de ressort (7) qui est prévue au niveau d'un élément à ressort (19) et la zone de loquet (8) au niveau d'un élément à loquet (18) et **en ce que** l'élément à ressort (19) ou l'élément à loquet (18) sont fabriqués indépendamment et interagissent à l'intérieur de l'assemblage d'enclenchement (6) et **en ce que** l'élément à ressort (19) est fabriqué en acier à ressort ou en un fil à ressort.

2. Unité de verrouillage selon la revendication 1, **caractérisée en ce que** le renforcement (12) est réalisé par une augmentation de la résistance mécanique spécifique du matériau, au moins au niveau de la zone de loquet (8), obtenue par un traitement thermique.

3. Unité de verrouillage selon la revendication 2, **caractérisée en ce que** le traitement thermique, effectué après une étape de mise en forme de l'assemblage d'enclenchement, résulte en une augmentation de la résistance mécanique spécifique relative d'au moins 4% et de préférence d'au moins 5%.

4. Unité de verrouillage selon une ou plusieurs des revendications précédentes, **caractérisée en ce que** l'ensemble de l'assemblage d'enclenchement (6) est fabriqué en un acier à ressort pouvant être mis en forme de façon permanente au moins à froid.

5. Unité de verrouillage selon une ou plusieurs des revendications précédentes, **caractérisée en ce que** le renforcement (12) est réalisé par une augmentation de l'épaisseur du matériau constituant la zone de loquet (8) et/ou **en ce que** la zone de loquet (8) est formée au moins par un élément de loquet (13) et un support de loquet (14) de façon à ce que l'élément de loquet (13) forme un angle ou un angle droit en direction du piston (2) par rapport au support de loquet (14).

6. Unité de verrouillage selon la revendication 5, **caractérisée en ce que** l'élément de loquet (13) possède une surface d'appui (15) interagissant, en position verrouillée, avec le piston (2) et **en ce que** le renforcement (12) est situé au niveau de la zone de loquet (8) sur l'élément de loquet (13) du côté opposé à la surface d'appui (15).

7. Unité de verrouillage selon la revendication 5, **caractérisée en ce que** le renforcement (12) est réalisé par un pli (16), en particulier par un pli d'une extrémité (16) du matériau du support de loquet (14), ou par un support (17) utilisé séparément.

8. Unité de verrouillage selon une ou plusieurs des revendications précédentes, **caractérisée en ce que** l'élément à ressort (19) est fabriqué en un matériau très élastique ou en un acier de ressort pouvant être déformé de façon permanent au moins à froid.

9. Unité de verrouillage selon une ou plusieurs des revendications précédentes, **caractérisée en ce que** le matériau de l'élément à loquet (18) possède une résistance mécanique à la force de traction supérieure à celle du matériau de l'élément à ressort (19).

10. Unité de verrouillage selon une ou plusieurs des revendications précédentes, **caractérisée en ce que** l'élément à loquet (18) ou l'assemblage d'enclenchement (6) possède un élément de ressort (21) fonctionnant selon la direction du mouvement (3) du piston (2) comme un renforcement (12).

11. Unité de verrouillage selon une ou plusieurs des revendications précédentes, **caractérisée en ce que** l'assemblage d'enclenchement (6) est fixé de façon mobile à un support (22) de façon à ce que la zone de loquet (8) peut être orientée selon la direction de mouvement (3) du piston (2) à un angle droit ou un angle aigu par rapport au piston (2).

12. Unité de verrouillage selon la revendication 5, **caractérisée en ce que** le piston (2) possède un rebord, une bride, une excroissance ou un crochet de fixation interagissant avec la zone à loquet (8) ou l'élément de loquet (13).

13. Unité de verrouillage selon la revendication 5, **caractérisée en ce que** l'élément de loquet (13) est formé par un crochet, un loquet, une excroissance ou un rebord.

14. Unité de verrouillage selon la revendication 11, **caractérisée en ce que** l'unité de verrouillage (1) possède un châssis (23) à l'intérieur duquel est situé le support (22) immobile par rapport au châssis (23) et à l'assemblage d'enclenchement (6).
